# EUROPEAN PATENT SPECIFICATION

(11) **EP 2 352 368 B1**
(45) Date of publication and mention of the grant of the patent: **14.11.2018**
(21) Application number: 09818148.0
(22) Date of filing: 29.06.2009
(51) Int. Cl.: A01K 15/02, A01K 5/01

(54) **SELF-RIGHTING DISPENSER**
SELBSTAUFRICHTENDER SPENDER
DISTRIBUTEUR À RAPPEL AUTOMATIQUE

(30) Priority: 01.10.2008 US 101783 P
(43) Date of publication of application: 10.08.2011
(73) Proprietor: Triple Crown Dog Academy, Inc., Hutto, TX 78634 (US)
(72) Inventor: BENSON, Keith, Hutto, TX 78634 (US)
(74) Representative: Freeman, Jacqueline Carol
(86) International application number: PCT/US2009/049054
(87) International publication number: WO 2010/039311

(56) References cited:
- CN-Y- 201 097 540
- US-A- 2 086 631
- US-A- 2 086 631
- US-A- 5 758 604
- US-A1- 2002 115 377
- US-A1- 2007 039 970
- US-A1- 2007 068 464
- US-A1- 2007 068 464
- US-B1- 6 526 912
- US-B1- 6 526 912

## Description

### BACKGROUND OF THE INVENTION

### 1. Technical Field:

The present invention relates in general to a self-righting dispenser of items, for example, animal food and/or animal treats.

### 2. Description of the Related Art:

Various types of dispensers are known in the art. A common objective of many conventional animal treat dispensers is to use the dispensing of treats to incentive animal interaction with the animal treat dispenser. One such animal treat dispenser is disclosed in U.S. Patent No. 6,526,912 to Ottoson.
U.S. 2,086,631 describes a substantially spherical body having a cavity therein in which catnip or other herbs may be contained, duct means for dispensing catnip odor or catnip leading from said cavity to the surface of said body and closure means for said duct means secured to said body, said duct means and closure means being constructed so that said closure means may be moved to and from positions completely closing said duct means; partially opening said duct means; and completely opening said duct means.
CN 201 097 540 describes a pet feeder, wherein a material bearing tray is locked and clamped by an upper cover and a base, a concave chamber of the center of the inner wall of the base is closely covered and fixed with a weight body, the upper cover is provided with a plurality of discharge outlets; through the feedstuff loading of the material bearing tray, the odor of the feedstuff emits outward from the discharge outlets for the pet to smell further for the pet to touch; the base is provided with the weight body and the upper cover and the base are of bending arcs, which ensure that the whole feeder produces a shaking action and then gets back to the prior standing state; during the shake, the feedstuff is dumped from the discharge outlets to the ground for the pet to eat.

U.S. 6,526,912 describes a dispenser for use by an animal including a base portion and an upper portion defined by at least one wall enclosing a container cavity, the at least one wall including at least one opening providing access to the container cavity. The at least one opening is disposed in the upper portion of the at least one wall and is constructed and arranged for placement in and removal from the container cavity of units to be obtained by the animal. The dispenser further includes a weighted body fixed to the at least one wall of the dispenser in the base portion, the weighted body providing means for return of the dispenser after movement to a position defined as an upright position with the upper portion above the base portion.
U.S. 5,758,604 describes a toy, preferably for animals, is shaped as a hollow body with an inner labyrinth. An object such as a tidbit, may be caused to move along the labyrinth, in that e.g. a dog manipulates the hollow body. The hollow body is preferably shaped as a cube with beveled edges, one side face of the cube being provided with an opening capable of receiving an insert member and discharging the tidbit after it has passed through the labyrinth.

### SUMMARY OF THE INVENTION

The invention is defined in the claims. A dispenser is defined in claim 1, a method of dispensing is defined in claim 7 and a method of making such a dispenser is defined in claim 8.

### BRIEF DESCRIPTION OF THE DRAWINGS

The present invention, as well as a preferred mode of use, will best be understood by reference to the following detailed description of one or more illustrative embodiments when read in conjunction with the accompanying drawings, wherein:
**Figure 1** is a front view of a dispenser in accordance with one embodiment;
**Figure 2** is another front view of the dispenser of **Figure 1** depicted with the cap removed;
**Figure 3** is a bottom plan view of the dispenser of **Figure 1****;**
**Figure 4** is a view of a dispenser of **Figure 1** illustrated with the cap removed;
**Figure 5** is more detailed front view of the dispenser of **Figure 1** depicting the lower aperture in a closed state;
**Figure 6** is a detailed front view of the dispenser of **Figure 1** with the lower housing depicted in phantom;
**Figure 7** is a top plan view of the interior of the lower housing of the dispenser of **Figure 1****;**
**Figure 8** is a top plan view of the interior of the lower housing of the dispenser of **Figure 1** with the base plate removed;
**Figure 9** is a top plan view of the interior of the lower housing of the dispenser of **Figure 1** with the base plate and weight removed; and
**Figure 10** is a view of the interior of the upper housing of the dispenser of **Figure 1****.**

### DETAILED DESCRIPTION OF ILLUSTRATIVE EMBODIMENT

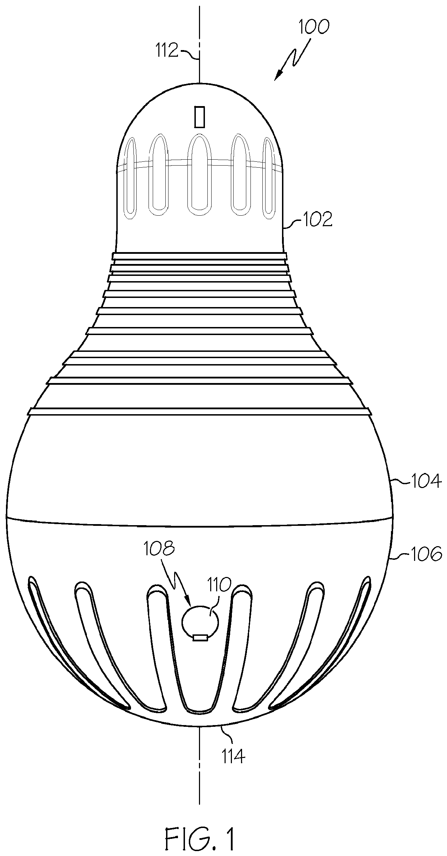

With reference now to the figures and with particular reference to **Figure 1****,** there is illustrated a front view of an exemplary dispenser **100** in accordance with one embodiment. In the following description, various relative terms such as upper, lower, etc. will be employed to describe dispenser **100.** It should be understood that all such terms are utilized for ease of description assuming the orientation of dispenser **100** depicted in **Figure 1** and are not to be construed as limiting the application of the claimed invention to dispensers in different orientations or described utilizing other terminology. Further, although dispenser **100** is suitable for dispensing animal treats and/or animal food, it will be appreciated that the disclosed dispenser is not limited in application to animal treats or animal food and is also suitable for dispensing other items, if desired.

Dispenser **100** can have any desired size, which can be influenced by any number of factors, such as the size of items (e.g., animal treats or food) to be dispensed, the intended application of dispenser **100** (e.g., the type, breed and/or size of animal that will interact with dispenser **100**), cost of manufacture, consumer preferences, etc. Dispenser **100** is preferably manufactured from one or more durable materials, such as one or more plastics. If one or more plastics are utilized, the components of dispenser **100** described below can be molded utilizing known techniques.

Dispenser **100** has a self-righting housing, which in the embodiment of **Figure 1** is generally teardrop shaped. In the depicted exemplary embodiment, the self-righting housing of dispenser **100** is generally radially symmetrical about central vertical axis 112 and comprises a cap **102,** an upper housing **104** and a lower housing **106.**

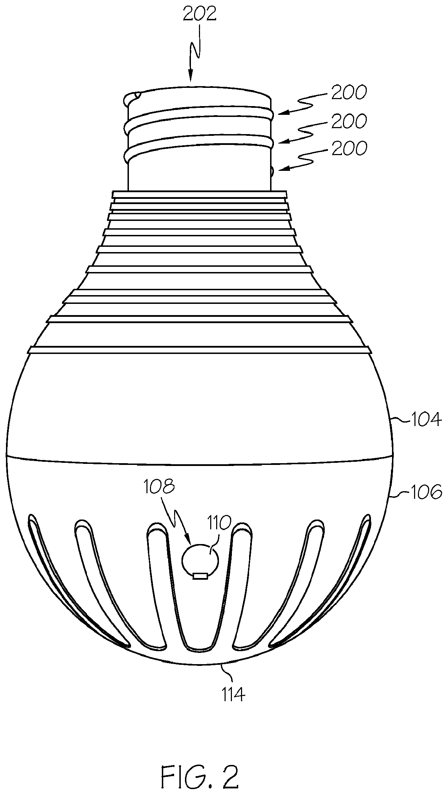

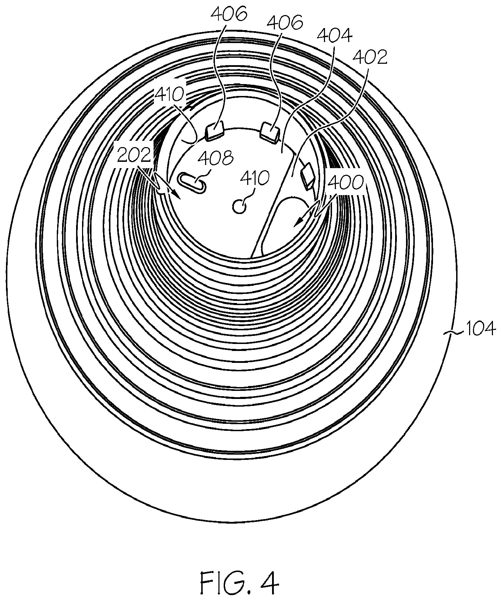

According to the invention, the cap 102 is removably coupled and recoupled to upper housing **104** to permit items to be inserted into an upper cavity **202** (see, e.g., **Figures 2** and **4**) formed in upper housing **104.** For example, in the embodiment depicted in **Figure 2****,** cap **102** can be coupled to upper housing **104** by threads **200** formed on an outer surface upper housing **104** and corresponding threads or ridges formed on an inner surface of cap **102.** Of course, in other embodiments, the thread arrangement of cap **102** and upper housing **104** can be varied, for example, with threads external to cap **102** and corresponding features formed on an inner surface of upper cavity **202.** Further, the coupling between cap **102** and upper housing **104** is not required to be threaded, and any other reasonably secure coupling that permits the coupling, decoupling, and recoupling of cap **102** and upper housing **104** is contemplated.

Upper housing **104** and lower housing **106** can be made as a unitary piece, but for ease of manufacture are preferably separately made and then attached to each other, for example, by interlocking threads, adhesive, sonic welding, press fitting, and/or other known technique. The attachment can be made easily reversible by the human consumer (as in the case of interlocking threads), for example, for ease of cleaning or storage, or alternatively, can be made effectively irreversible (as in the case of adhesive attachment, sonic welding or press fitting).

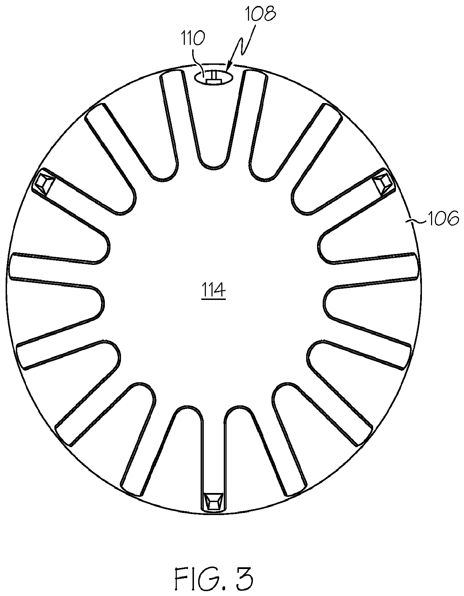

As shown in **Figures 1-3****,** lower housing **106** of dispenser **100** has a curved or arcuate bottom **114** that is intended to rest on an underlying surface, such as the ground or a floor. Lower housing **106** contains or has a sufficient weight (discussed further herein), which together with curved bottom **114,** permits dispenser **100** to self-right when disturbed from the upright orientation depicted in **Figure 1****.** The outer surface of some or all of lower housing **106** may optionally be textured by a surface finish of the material utilized for lower housing **106** or by an applied coating to increase its coefficient of friction and reduce a tendency of dispenser **100** to slide rather than tip when horizontal force is imparted to dispenser 100.

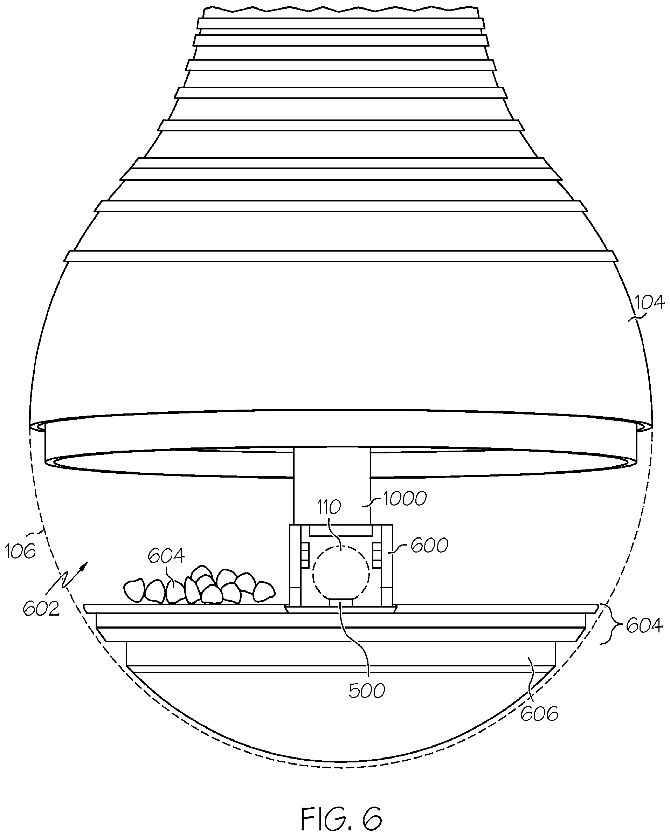

Referring now to **Figure 4****,** there is depicted a view of dispenser **100** with cap **102** removed. As noted above, upper housing **104** has an upper cavity **202** for holding items to be dispensed. Items to be dispensed, such as animal treats, are introduced into upper cavity **202,** for example, by removing cap **102** and placing or pouring the items into upper cavity **202.** In a typical use scenario, cap **202** is then recoupled to upper housing **104** to prevent the items from spilling from upper cavity **202** directly to an exterior of dispenser **100.** Upper cavity **202** has a floor **402** having an upper aperture **400** through which items may pass to reach a lower cavity **602** of dispenser **100** (described with reference to **Figure 6** below).

The effective size of upper aperture **400** is preferably adjustable to permit a user to control the flow of items from upper cavity **202** to the lower cavity. In the illustrated embodiment, the effective size of upper aperture **400** can be adjusted by a rotatable plate **404** captured between a floor **402** of upper cavity **202** and tabs **406** extending from inner sidewall **410** of upper cavity **202.** Rotatable plate **404** is manually rotatable about a boss **410** on floor **402** extending into a concavity or hole in rotatable plate **404,** and manual rotation of rotatable plate **404** is facilitated by an upwardly extending tab **408.** Thus, by applying manual force to tab **408** with a finger, a person can rotate rotatable plate **404** until upper aperture **400** is fully exposed, partially exposed, or completely blocked by rotatable plate **404.** Rotatable plate **404** is retained in the selected position, for example, by friction between the upper surface of rotatable plate **404** and the bottom of tabs **406,** until the position of rotatable plate **404** is subsequently readjusted. Of course in other embodiments, one or more other adjustment mechanisms, such as a sliding door or partial plug that partially fills upper aperture **400,** can be used to adjust the effective size of upper aperture **400.**

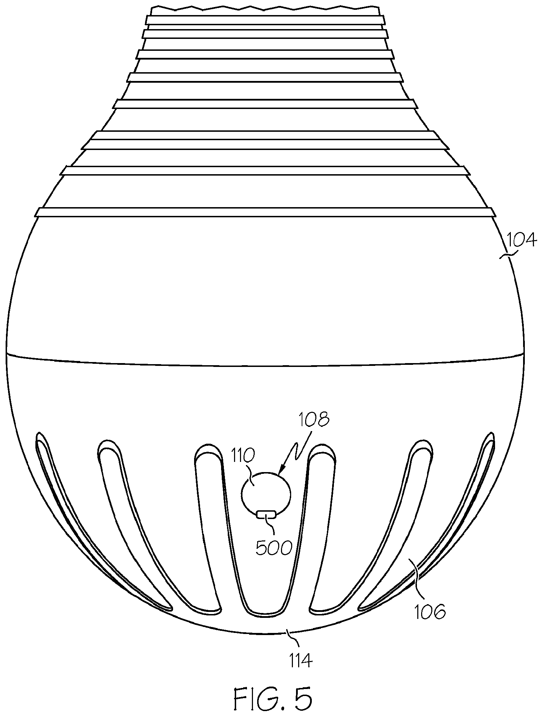

With reference now to **Figures 5-6****,** more detailed views of lower housing **106** of dispenser **100** and its contents are illustrated. In particular, **Figure** 5 is a front elevation view of lower housing **106,** and **Figure 6** is a second front elevation view in which lower housing **106** is illustrated in phantom.

**Figures 5-6** depict lower housing **106** of dispenser **100** having a lower aperture **108** through which items **604** (e.g., animal treats) may be dispensed from a lower cavity **602** within dispenser **100** to an exterior of dispenser **100.** In various embodiments, lower cavity **602** may include some or substantially all of the volumes of upper housing **104** and lower housing **106.** Further, although in the illustrated embodiment items to be dispensed pass directly from upper cavity **202** into lower cavity **602,** in other embodiments one or more additional chambers or passages may be disposed between upper cavity **202** and lower cavity **602,** for example, to regulate the rate of dispensing of items **604** via lower aperture **108.**

In a preferred embodiment, the effective size of lower aperture **108** is adjustable to permit a human to control the dispensing of items from lower cavity **602.** In the illustrated embodiment, the effective size of lower aperture 108 can be adjusted by a sliding door **110** captured in a frame **600** disposed adjacent lower aperture 108. Manual manipulation of sliding door **110** is facilitated by an outwardly extending tab **500.** Thus, by applying manual force to tab **500** with a finger, a person can translate sliding door **110** until lower aperture **108** is fully open, partially open, or completely blocked by sliding door **110** (as shown in **Figure 6**). Sliding door **110** is retained in the selected position, for example, by friction between sliding door **110** and frame **600,** until subsequently adjusted. Of course in other embodiments, one or more other adjustment mechanisms, such as a rotating plate or partial plug, can be used to adjust the effective size of lower aperture **108.**

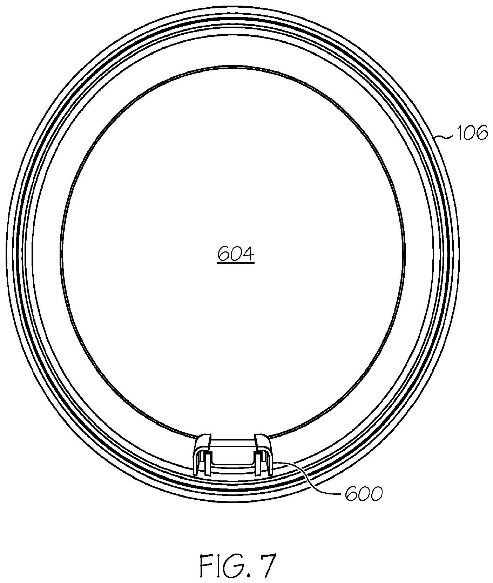

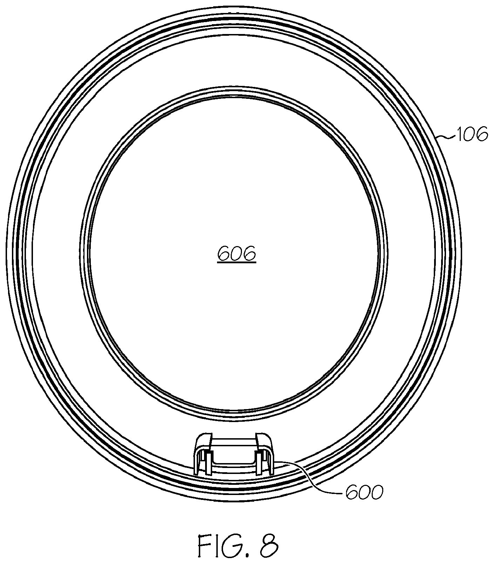

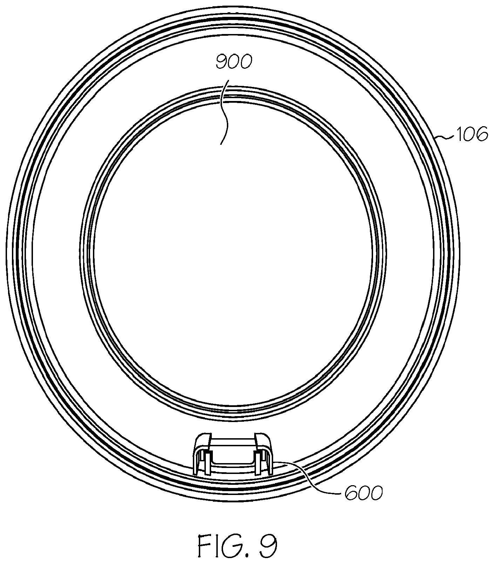

**Figures 6-9** further illustrate that in the depicted exemplary embodiment, lower housing **106** of dispenser **100** contains a base plate **604** defining an extent of lower cavity **602.** Base plate **604** rests on a weight **606** that, given curved bottom **114** of lower housing **104,** causes dispenser **100** to self-right if tipped. Weight **606** and/or base plate **604** is/are preferably secured to interior surface **900** of lower housing **106.** A separate weight **606** can be omitted in embodiments in which lower housing **106** and/or items **604** within lower cavity **602** has sufficient mass to self-right dispenser **100.**

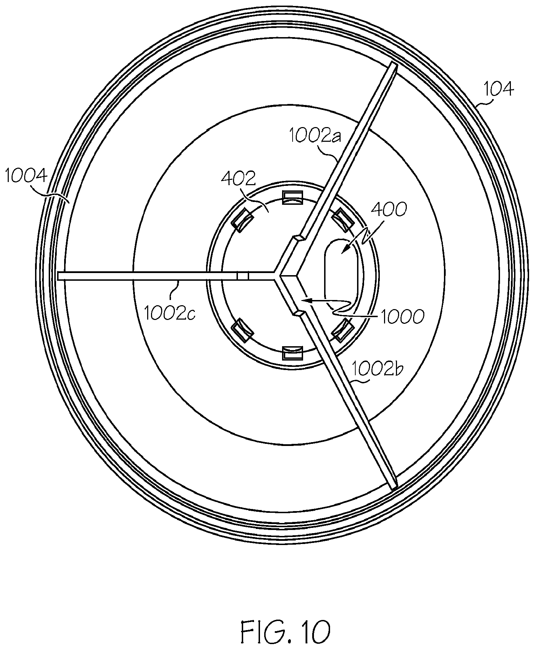

Referring now to **Figure 10****,** there is depicted a view of the interior of upper housing **104** of dispenser **100** of **Figure 1****.** As shown, upper housing **104,** which is substantially hollow, contains an optional internal support **1000.** In the illustrated embodiment, internal support **1000** is substantially aligned with central vertical axis **112** and extends, at its central point, between floor **402** of upper cavity **202** and base plate **604.** In the illustrated embodiment, internal support **1000** includes three splines **1002a, 1002b** and **1002c** extending outwardly to contact and support inner surface **1004** of upper housing **104.** In some embodiments, including that depicted in **Figure 10****,** splines **1002a, 1002b** and **1002c** do not extend downward all the way to base plate **604** in order to provide a lower cavity **602** of greater volume. As will be appreciated, internal support **1000** increases the rigidity of dispenser **100,** making it less prone to breakage or deformation when in use.

In a typical animal use scenario, a human user removes cap **102** from upper housing **104** and optionally adjusts rotating plate **404** in upper cavity **202** to set the effective size of upper aperture **400** to a desired size that is preferably larger than at least one item to be dispensed. In general, the smaller the effective size of upper aperture **400,** the more movement of dispenser **100** is required to cause items to progress from upper cavity **202** to lower cavity **602.** The user also places one or more items to be dispensed in upper cavity **202** and/or cap **102** and then recouples cap **102** to upper housing **104.** The user may also adjust a position of sliding door **110** in order to control the dispensing of items from lower cavity **602.** Again, the smaller the opening of sliding door **110,** the more manipulation of dispenser **100** is generally required to dispense items from lower cavity **602.**

After dispenser **100** is loaded with one or more items to be dispensed, the human user may place loaded dispenser **100** on an underlying surface, such as a floor or the ground, and make the dispenser **100** accessible to an animal, such as a dog. As the animal interacts with dispenser **100** by pawing, pushing, rolling or otherwise moving dispenser **100** from its upright position, one or more items progress from upper cavity **202** to lower cavity **602** via upper aperture **400** and are eventually dispensed to an exterior of dispenser **100** via lower aperture **108.** Following disturbance from its upright position, the dispenser **100** tends to self-right and to return to the upright position. In this manner, the animal is incentivized to interact with dispenser **100.** It will be appreciated that the effective sizes of upper aperture **400** and lower aperture **108** can be adjusted at any time during use in order to make dispensing the item(s) easier or harder.

While the present invention has been particularly shown as described with reference to one or more preferred embodiments, it will be understood by those skilled in the art that various changes in form and detail may be made therein without departing from the scope of the invention as defined in the appended claims. For example, those skilled in the art will appreciate that the outer contour of dispenser **100** can vary in various embodiments. With sufficient weight in the lower portion of the housing, the illustrated embodiment will self-right to the orientation shown in **Figure 1** from any position. In other embodiments, this need not be the case.

## Claims

1. A dispenser for animal food and animal treats, the dispenser comprising:
a self-righting housing (100) including:
an upper housing (104), a lower housing (106) and a cap (102) removably couplable to the upper housing;
a hollow upper cavity (202) in the upper housing for containing a plurality of items to be dispensed, wherein the cap is removable from the upper housing to provide external access to the upper cavity and can be recoupled to the upper housing;
an interior lower cavity (602) for containing a plurality of items to be dispensed from the interior lower cavity to the exterior of the dispenser,
a floor (402) on the upper cavity;
an upper aperture (400) through the floor by which items to be dispensed can move from the upper cavity to the interior lower cavity as the dispenser is moved by the pet;
a curved bottom surface (114) that is intended to rest on an underlying surface; and
a dispensing aperture (108), disposed in the lower housing and in communication with the interior lower cavity, through which items may be dispensed from the interior lower cavity to the exterior of the dispenser.

2. The dispenser of Claim 1, and further comprising an adjustment mechanism that selectively controls a size of the dispensing aperture.

3. The dispenser of Claim 1, and further comprising a weight disposed in the lower portion of the housing.

4. The dispenser of Claim 1, wherein the curved bottom surface is textured to provide skid- resistance.

5. The dispenser of Claim 1, wherein the cap is removably couplable to the upper portion of the housing by one or more threads disposed on the cap or on the housing.

6. The dispenser of Claim 1, wherein the housing is generally tear-shaped.

7. A method of dispensing items from a dispenser for animal food and animal treats having a self-righting housing including an upper housing, a lower housing, and a removable cap, wherein the lower housing has a curved bottom surface, said method comprising:
placing a plurality of items to be dispensed within hollow upper cavity in the upper housing;
enclosing the plurality of items in the interior upper cavity with the removable cap rotatably couplable to the upper housing, wherein the cap is removable from the upper housing to provide external access to the upper cavity and recoupled to the upper housing ;
placing the curved bottom surface of the self-righting housing on an underlying surface;
disturbing the self-righting housing from an upright resting position, such that one or more of the plurality of items move from the upper cavity through an upper aperture in a floor on the upper cavity and into the interior lower cavity and such that one or more items within the interior lower cavity are dispensed from the interior lower cavity via a dispensing aperture disposed in the lower housing; and
following the disturbing, the self-righting housing returning toward the upright resting position.

8. A method of making a dispenser for animal food and animal treats, said method comprising:
forming a self-righting housing including:
an upper housing, a lower housing and a cap removably couplable to the upper housing;
a hollow upper cavity in the upper housing for containing a plurality of items to be dispensed, wherein the cap is removed from the upper housing to provide external access to the upper cavity and recoupled to the upper housing;
an interior lower cavity for containing a plurality of items to be dispensed from the interior lower cavity to the exterior of the dispenser,
a floor on the upper cavity;
an upper aperture through the floor by which items to be dispensed move from the upper cavity to the interior lower cavity as the dispenser is moved by the pet;
a curved bottom surface that rests on an underlying surface, and
a dispensing aperture, disposed in the lower housing and in communication with the interior lower cavity, through which items are dispensed from the interior lower cavity to the exterior of the dispenser.

9. The method of Claim 8, further comprising attaching a weight disposed in the lower housing.

10. The method of Claim 8, further comprising texturing the curved bottom surface to provide skid-resistance.

11. The method of Claim 8, wherein forming the self-righting housing comprises forming a generally tear-shaped self-righting housing.

12. The method of Claim 8, wherein forming the self-righting housing comprises:
forming the upper housing;
forming the lower housing separately; and joining the upper housing and the lower housing.

13. The dispenser of Claim 2, wherein the adjustment mechanism includes a rotatable plate.

14. The method of Claim 7, further comprising:
selectively controlling a size of the upper aperture with an adjustment mechanism.

15. The method of Claim 14, wherein: the dispenser includes a rotatable plate (404); and wherein selectively controlling the size of the upper aperture includes rotating the plate

16. The method of Claim 8, wherein the forming further includes:
forming an adjustment mechanism that selectively controls the size of the upper aperture.

17. The method of Claim 16, wherein forming the adjustment mechanism comprises:
forming a rotatable plate (404).

## Patentansprüche

1. Spender für Tierfutter und Tiersnacks, der Folgendes umfasst:
ein selbstaufrichtendes Gehäuse (100), das Folgendes aufweist:
ein oberes Gehäuse (104), ein unteres Gehäuse (106) und eine Kappe (102), die sich abnehmbar mit dem oberen Gehäuse verbinden lässt,
einen oberen Hohlraum (202) in dem oberen Gehäuse zum Aufnehmen mehrerer Gegenstände, die abgegeben werden sollen, wobei sich die Kappe von dem oberen Gehäuse abnehmen lässt, so dass sie Zugang von außen zu dem oberen Raum bietet, und wieder mit dem oberen Gehäuse verbunden werden kann,
einen unteren Innenraum (602) zum Aufnehmen mehrerer Gegenstände, die daraus zur Außenseite des Spenders abgegeben werden sollen,
einen Boden (402) in dem oberen Raum,
eine durch den Boden verlaufende obere Öffnung (400), über die sich abzugebende Gegenstände aus dem oberen Raum in den unteren Innenraum bewegen können, wenn der Spender von dem Haustier bewegt wird,
eine gekrümmte Bodenfläche (114), die auf einer darunterliegenden Fläche aufliegen soll, und
eine Abgabeöffnung (108), die in dem unteren Gehäuse angeordnet ist und mit dem unteren Innenraum in Verbindung steht und über die Gegenstände aus dem unteren Innenraum zur Außenseite des Spenders abgegeben werden können.

2. Spender nach Anspruch 1, der ferner einen Verstellmechanismus umfasst, welcher gezielt eine Größe der Abgabeöffnung reguliert.

3. Spender nach Anspruch 1, der ferner ein in dem unteren Abschnitt des Gehäuses angeordnetes Gewicht umfasst.

4. Spender nach Anspruch 1, wobei die gekrümmte Bodenfläche strukturiert ist und so für Rutschfestigkeit sorgt.

5. Spender nach Anspruch 1, wobei sich die Kappe über ein oder mehrere an der Kappe oder dem Gehäuse angeordnete Gewindegänge abnehmbar mit dem oberen Abschnitt des Gehäuses verbinden lässt.

6. Spender nach Anspruch 1, wobei das Gehäuse allgemein tropfenförmig ist.

7. Verfahren zum Abgeben von Gegenständen aus einem Spender für Tierfutter und Tiersnacks mit einem selbstaufrichtenden Gehäuse, zu dem ein oberes Gehäuse, ein unteres Gehäuse und eine abnehmbare Kappe gehören, wobei das untere Gehäuse eine gekrümmte Bodenfläche aufweist, wobei das Verfahren Folgendes aufweist:
Hineinlegen mehrerer abzugebender Gegenstände in den oberen Hohlraum in dem oberen Gehäuse,
Umschließen der mehreren Gegenstände in dem oberen Innenraum mit der abnehmbaren Kappe, die sich drehbar mit dem oberen Gehäuse verbinden lässt, wobei sich die Kappe von dem oberen Gehäuse abnehmen lässt, so dass sie Zugang von außen zu dem oberen Raum bietet, und wieder mit dem oberen Gehäuse verbunden wird,
Auflegen der gekrümmten Bodenfläche des selbstaufrichtenden Gehäuses auf eine darunterliegende Fläche,
Ablenken des selbstaufrichtenden Gehäuses aus einer aufrechten Ruheposition, so dass sich ein oder mehr der mehreren Gegenstände aus dem oberen Raum durch eine obere Öffnung in einem Boden in dem oberen Raum in den unteren Innenraum bewegen und so dass ein oder mehr Gegenstände in dem unteren Innenraum über eine in dem unteren Gehäuse angeordnete Abgabeöffnung daraus abgegeben werden, und
nach dem Ablenken, Zurückkehren des selbstaufrichtenden Gehäuses in die aufrechte Ruheposition.

8. Verfahren zum Herstellen eines Spenders für Tierfutter und Tiersnacks, das Folgendes umfasst:
Bilden eines selbstaufrichtenden Gehäuses, das Folgendes aufweist:
ein oberes Gehäuse, ein unteres Gehäuse und eine Kappe, die sich abnehmbar mit dem oberen Gehäuse verbinden lässt,
einen oberen Hohlraum in dem oberen Gehäuse zum Aufnehmen mehrerer Gegenstände, die abgegeben werden sollen, wobei die Kappe von dem oberen Gehäuse abgenommen wird, so dass sie Zugang von außen zu dem oberen Raum bietet, und wieder mit dem oberen Gehäuse verbunden wird,
einen unteren Innenraum zum Aufnehmen mehrerer Gegenstände, die daraus zur Außenseite des Spenders abgegeben werden sollen,
einen Boden in dem oberen Raum,
eine durch den Boden verlaufende obere Öffnung, über die sich abzugebende Gegenstände aus dem oberen Raum in den unteren Innenraum bewegen, wenn der Spender von dem Haustier bewegt wird,
eine gekrümmte Bodenfläche, die auf einer darunterliegenden Fläche aufliegt, und
eine Abgabeöffnung, die in dem unteren Gehäuse angeordnet ist und mit dem unteren Innenraum in Verbindung steht und über die Gegenstände aus dem unteren Innenraum zur Außenseite des Spenders abgegeben werden.

9. Verfahren nach Anspruch 8, das ferner das Anbringen eines in dem unteren Gehäuse angeordneten Gewichts umfasst.

10. Verfahren nach Anspruch 8, das ferner das Strukturieren der gekrümmten Bodenfläche zum Bereitstellen von Rutschfestigkeit umfasst.

11. Verfahren nach Anspruch 8, wobei das Ausbilden des selbstaufrichtenden Gehäuses das Ausbilden eines allgemein tropfenförmigen selbstaufrichtenden Gehäuses umfasst.

12. Verfahren nach Anspruch 8, wobei das Ausbilden des selbstaufrichtenden Gehäuses Folgendes umfasst:
Ausbilden des oberen Gehäuses,
separates Ausbilden des unteren Gehäuses und
Zusammenfügen des oberen und des unteren Gehäuses.

13. Spender nach Anspruch 2, wobei der Verstellmechanismus eine drehbare Platte aufweist.

14. Verfahren nach Anspruch 7, das ferner Folgendes umfasst:
gezieltes Regulieren einer Größe der oberen Öffnung mit einem Verstellmechanismus.

15. Verfahren nach Anspruch 14, wobei:
der Spender eine drehbare Platte (404) aufweist und
das gezielte Regulieren der Größe der oberen Öffnung das Drehen der Platte umfasst.

16. Verfahren nach Anspruch 8, wobei das Ausbilden ferner Folgendes umfasst:
Ausbilden eines Verstellmechanismus, der gezielt die Größe der oberen Öffnung reguliert.

17. Verfahren nach Anspruch 16, wobei das Ausbilden des Verstellmechanismus Folgendes umfasst:
Ausbilden einer drehbaren Platte (404).

## Revendications

1. Un distributeur d'aliments pour animaux et friandises pour animaux, le distributeur comprenant :
un boîtier à rappel automatique (100) comportant :
un boîtier supérieur (104), un boîtier inférieur (106) et un bouchon (102) pouvant être couplé de manière détachable au boîtier supérieur ;
une cavité supérieure creuse (202) dans le boîtier supérieur pour contenir une pluralité d'articles à distribuer,
le bouchon étant détachable du boîtier supérieur pour fournir un accès externe à la cavité supérieure et pouvant être couplé de nouveau au boîtier supérieur ;
une cavité inférieure intérieure (602) pour contenir une pluralité d'articles à distribuer de la cavité inférieure intérieure à l'extérieur du distributeur ;
un fond (402) sur la cavité supérieure ;
une ouverture supérieure (400) à travers le fond par laquelle les articles à distribuer peuvent passer de la cavité supérieure à la cavité inférieure intérieure quand le distributeur est déplacé par l'animal domestique ;
une surface de base recourbée (114) qui est prévue pour reposer sur une surface sous-jacente ; et
une ouverture de distribution (108), disposée dans le boîtier inférieur et en communication avec la cavité inférieure intérieure, à travers laquelle les articles peuvent être distribués de la cavité inférieure intérieure à l'extérieur du distributeur.

2. Le distributeur de la revendication 1, et comprenant en outre un mécanisme de réglage qui contrôle de manière sélective une taille de l'ouverture de distribution.

3. Le distributeur de la revendication 1, et comprenant en outre un poids disposé dans la partie inférieure du boîtier.

4. Le distributeur de la revendication 1, dans lequel la surface de base recourbée est texturée pour apporter une résistance au glissement.

5. Le distributeur de la revendication 1, dans lequel le bouchon peut être couplé de manière détachable à la partie supérieur du boîtier par un ou plusieurs filetages disposés sur le bouchon ou sur le boîtier.

6. Le distributeur de la revendication 1, dans lequel le boîtier présente une forme générale de larme.

7. Un procédé pour distribuer des articles depuis un distributeur d'aliments pour animaux et friandises pour animaux, doté d'un boîtier à rappel automatique comprenant un boîtier supérieur, un boîtier inférieur et un bouchon détachable, le boîtier inférieur présentant une surface de base recourbée, ledit procédé comprenant les étapes consistant à :
placer une pluralité d'articles à dispenser à l'intérieur de la cavité supérieure creuse dans le boîtier supérieur ;
enfermer la pluralité d'articles dans la cavité supérieure intérieure avec le bouchon détachable pouvant être couplé par rotation au boîtier supérieur, le bouchon étant détachable du boîtier supérieur pour fournir un accès externe à la cavité supérieure et pouvant être couplé à nouveau au boîtier supérieur ;
placer la surface de base recourbée du boîtier à rappel automatique sur une surface sous-jacente ;
déranger le boîtier à rappel automatique depuis une position verticale de repos, de manière à ce que un ou plusieurs de la pluralité d'articles passent de la cavité supérieure à travers une ouverture supérieure dans un fond de la cavité supérieure et arrivent dans la cavité inférieure intérieure et de manière à ce que un ou plusieurs articles à l'intérieur de la cavité inférieure intérieure soient distribués depuis la cavité inférieure intérieure à travers une ouverture de distribution disposée dans le boîtier inférieur ; et
à la suite du dérangement, le boîtier à rappel automatique revenant vers la position verticale de repos.

8. Un procédé de fabrication d'un distributeur d'aliments pour animaux et friandises pour animaux, ledit procédé comprenant les étapes consistant à :
fabriquer un boîtier à rappel automatique comprenant :
un boîtier supérieur, un boîtier inférieur et un bouchon pouvant être couplé de manière détachable au boîtier supérieur ;
une cavité supérieure creuse dans le boîtier supérieur pour contenir une pluralité d'articles à distribuer,
le bouchon étant détachable du boîtier supérieur pour fournir un accès externe à la cavité supérieure et pouvant être couplé de nouveau au boîtier supérieur ;
une cavité inférieure intérieure pour contenir une pluralité d'articles à distribuer de la cavité inférieure intérieure à l'extérieur du distributeur ;
un fond sur la cavité supérieure ;
une ouverture supérieure à travers le fond par laquelle les articles à distribuer passent de la cavité supérieure à la cavité inférieure intérieure quand le distributeur est déplacé par l'animal domestique ;
une surface de base recourbée qui repose sur une surface sous-jacente ; et
une ouverture de distribution, disposée dans le boîtier inférieur et en communication avec la cavité inférieure intérieure, à travers laquelle les articles sont distribués de la cavité inférieure intérieure à l'extérieur du distributeur.

9. Le procédé de la revendication 8, comprenant en outre l'étape consistant à attacher un poids disposé dans le boîtier inférieur.

10. Le procédé de la revendication 8, comprenant en outre l'étape consistant à texturer la surface de base recourbée pour apporter une résistance au glissement.

11. Le procédé de la revendication 8, dans lequel la fabrication du boîtier à rappel automatique comprend la fabrication d'un boîtier à rappel automatique présentant une forme générale de larme.

12. Le procédé de la revendication 8, dans lequel la fabrication du boîtier à rappel automatique comprend les étapes consistant à :
fabriquer le boîtier supérieur ;
fabriquer le boîtier inférieur séparément ; et
joindre le boîtier supérieur et le boîtier inférieur.

13. Le distributeur de la revendication 2, dans lequel le mécanisme de réglage comprend une plaque rotative.

14. Le procédé de la revendication 7, comprenant en outre l'étape consistant à :
contrôler de manière sélective une taille de l'ouverture supérieure par un mécanisme de réglage.

15. Le procédé de la revendication 14, dans lequel le distributeur comprend une plaque rotative (404) ; et
dans lequel l'étape consistant à contrôler de manière sélective la taille de l'ouverture supérieure comprend la rotation de la plaque.

16. Le procédé de la revendication 8, dans lequel la fabrication comprend en outre :
la fabrication d'un mécanisme de réglage qui contrôle de manière sélective la taille de l'ouverture supérieure.

17. Le procédé de la revendication 16, dans lequel la fabrication du mécanisme de réglage comprend :
la fabrication d'une plaque rotative (404).
